# EUROPEAN PATENT SPECIFICATION

(11) **EP 4 379 860 B1**
(45) Date of publication and mention of the grant of the patent: **11.03.2026**
(21) Application number: 22849164.3
(22) Date of filing: 01.07.2022
(51) Int. Cl.: H01M 4/38, H01M 4/36, H01M 4/48, H01M 4/134, H01M 4/1395, H01M 10/052, H01M 4/58, H01M 4/62, H01M 10/0525, H01M 4/02

(54) **NEGATIVE ELECTRODE ACTIVE MATERIAL FOR SECONDARY BATTERIES, AND SECONDARY BATTERY**
NEGATIVELEKTRODENAKTIVMATERIAL FÜR SEKUNDÄRBATTERIEN UND SEKUNDÄRBATTERIE
MATÉRIAU ACTIF D'ÉLECTRODE NÉGATIVE POUR BATTERIES SECONDAIRES ET BATTERIE SECONDAIRE

(30) Priority: 30.07.2021 JP 2021125622
(43) Date of publication of application: 05.06.2024
(73) Proprietor: Panasonic Intellectual Property Management Co., Ltd., Kadoma-shi, Osaka 571-0057 (JP)
(72) Inventor: BADAR, Saifullah, Kadoma-shi, Osaka 571-0057 (JP); SUZUKI, Hirotetsu, Kadoma-shi, Osaka 571-0057 (JP); SAKATA, Motohiro, Kadoma-shi, Osaka 571-0057 (JP)
(74) Representative: Novagraaf International SA
(86) International application number: PCT/JP2022/026454
(87) International publication number: WO 2023/008098

(56) References cited:
- WO-A1-2015/129264
- WO-A1-2018/101072
- WO-A1-2020/166658
- CN-A- 111 755 670
- CN-A- 111 755 670
- JP-A- 2019 040 701
- US-A1- 2020 168 890
- US-B2- 9 944 851

## Description

### [Technical Field]

The present invention relates to a negative electrode active material for a secondary battery and a secondary battery.

### [Background Art]

With a demand for high-energy density in secondary batteries, as a negative electrode active material having a high theoretical capacity density, use of a material containing silicon capable of being alloyed with lithium is expected.

Patent Literature 1 proposes a method for producing a negative electrode material for a lithium ion secondary battery, the negative electrode material including silicon-based active material particles containing silicon and capable of storing and releasing lithium ions: the method including a nitrogen introduction step, in which a nitrogen source is supplied to the silicon-based active material particles while heating in a heating device to allow the silicon-based active material particles to contain nitrogen. In the nitrogen introduction step, the temperature and the amount of the nitrogen source supplied in the heating device are adjusted to control the nitrogen content in the silicon-based active material particles to a range of 100 ppm or more and 50,000 ppm or less, and a carbon source is passed through the heating device along with the nitrogen source to allow the silicon-based active material particles to contain nitrogen and to form a carbon coating on the silicon-based active material particle surface.

Patent Literature 2 proposes a negative electrode active material including a silicate phase and a silicon phase dispersed in the silicate phase. The silicate phase eases the stress from expansion and contraction of the silicon phase involved with charge and discharge, and therefore suppresses capacity deterioration.

### [Citation List]

### [Patent Literature]

[PLT 1]
   Japanese Unexamined Patent Publication No. 2015-204192
[PLT 2]
   Japanese Unexamined Patent Publication No. 2015-153520

### [Summary of Invention]

### [Technical Problem]

However, the silicon compound such as silicate tends to be eroded gradually by side reactions in the battery. For example, in a secondary battery having a nonaqueous electrolyte, hydrogen fluoride (HF) generates. Hydrogen fluoride goes through side reactions with the silicate phase to cause impurities to be deposited in the negative electrode. The erosion of the silicate phase causes the battery capacity to degrade.

### [Solution to Problem]

The invention is as set out in the independent claims, further aspects of the invention are outlined in the dependent claims. Embodiments that do not fall within the scope of the claims do not describe part of the invention. An aspect of the present invention relates to a negative electrode active material for a secondary battery including Si-containing particles, the Si-containing particles including a silicon compound phase and a silicon phase dispersed in the silicon compound phase, and a silicon nitride phase dispersed in the silicon compound phase, wherein the silicon compound phase is at least one of a silicon oxide phase and a silicate phase.

Another aspect of the present invention relates to a secondary battery including a negative electrode including the above-described negative electrode active material for a secondary battery, a positive electrode, and a nonaqueous electrolyte.

### [Advantageous Effects of Invention]

With the negative electrode active material for a secondary battery of the present invention, durability of the silicon compound phase improves, and therefore a secondary battery with excellent charge and discharge cycle characteristics can be produced.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

[FIG. 1] FIG. 1 is a cross sectional view schematically illustrating a Si-containing particle of an embodiment of the present invention.
[FIG. 2] FIG. 2 is a partially cutaway schematic oblique view of a secondary battery in an embodiment of the present invention.
[FIG. 3] FIG. 3 is an example of an NMR spectrum obtained by a Si-NMR measurement of the Si-containing particles.
[FIG. 4] FIG. 4 is an example of an XRD spectrum obtained by an X-ray diffraction measurement of the Si-containing particles.

### [Description of Embodiments]

In the following, examples are illustrated for embodiments of the present disclosure, but the present disclosure is not limited to the examples below. In the following description, specific numerical values and materials may be exemplified, but other numerical values and other materials may be used as long as the effect of the present disclosure is obtained. In this specification, the phrase "numeral value A to numeral value B" means to include the numeral value A and the numeral value B, and can be read as "the numeral value A or more and the numeral value B or less". In the description below, when a lower limit and an upper limit of numeral values relating to specific physical properties and conditions are exemplified, any of the exemplified lower limits and any of the exemplified upper limits can be paired arbitrarily unless the lower limit equals the upper limit or more. When a plurality of materials are given as examples, one of them can be selected and used singly, or two or more can be used in combination.

The present disclosure includes a combination of two or more of the items described in claims arbitrarily selected from the plurality of claims in the appended Claims. That is, as long as there is no technical contradiction, two or more items described in claims arbitrarily selected from the plurality of claims in the appended Claims can be combined.

The negative electrode active material for a secondary battery (hereinafter, also simply referred to as a negative electrode active material) of the embodiment of the present disclosure includes Si-containing particles. The negative electrode active material means a material that is included in the negative electrode of a secondary battery and that exhibits a capacity by storing and releasing of lithium ions. The secondary battery includes a negative electrode, a positive electrode, and a nonaqueous electrolyte.

### <Si-containing particles>

The shape of the Si-containing particles is not particularly limited. The Si-containing particles include a silicon compound phase, a silicon phase dispersed in the silicon compound phase, and a silicon nitride phase dispersed in the silicon compound phase. That is, the Si-containing particles may be composite particles including a silicon compound phase, a silicon phase, and a silicon nitride phase. Such Si-containing particles easily allow achievement in both higher capacity and improvement in charge and discharge cycle characteristics in batteries. However, the silicon compound phase is a different phase from the silicon nitride phase, and includes at least one of a silicon oxide phase and a silicate phase. The silicon phase exhibits an electrochemical capacity.

The Si-containing particles may have a sea-island structure. In the sea-island structure, the silicon compound phase forms a continuous sea portion or a matrix, and is formed of at least one of a silicon oxide phase and a silicate phase. The silicon phase and the silicon nitride phase each forms an island portion. In a grain of the Si-containing particles, a plurality of island portions are dispersed in the sea portion.

The silicon phase dispersed in the silicon compound phase expands along with storage of lithium ions, and contracts along with release of lithium ions. The stress caused by the expansion and contraction is relieved by the silicon compound phase. The stress relief suppresses cracks and breakages of the Si-containing particles and reduction in battery charge and discharge cycle characteristics.

By adjusting the amount of the silicon phase dispersed in the silicon compound phase, the Si-containing particles can have a higher capacity. By adjusting the amount of the silicon nitride phase dispersed in the silicon compound phase, the Si-containing particles can have a higher capacity.

The silicon compound phase including at least one of a silicon oxide phase and a silicate phase tends to be eroded gradually by side reactions in the battery. The silicon nitride phase dispersed in the silicon compound phase has effects to suppress such erosion of the silicon compound phase. By suppressing the erosion, durability of the silicon compound phase significantly improves. As a result, charge and discharge cycle characteristics of the battery improve.

The smaller the mass ratio of the silicon nitride phase relative to the total of the silicon compound phase and the silicon nitride phase included in the Si-containing particles, the more the silicon phase can be included in the silicon compound phase, and therefore the capacity of the Si-containing particles can be significantly increased. Meanwhile, the effects of improvement in durability of the silicon compound phase by the silicon nitride phase are reduced. The greater the mass ratio of the silicon nitride phase, and the smaller the relative mass ratio of the silicon compound phase, the less effects of increasing the capacity of the Si-containing particles, but the effects of improvement in durability of the silicon compound phase by the silicon nitride phase significantly increases.

The mass ratio of the silicon nitride phase relative to the total of the silicon compound phase and the silicon nitride phase included in the Si-containing particles may be, for example, 3 mass% or more and 45 mass% or less, or 6 mass% or more and 32 mass% or less. When the above-described mass ratio of the silicon nitride phase is adjusted to be within the above-described range, a higher capacity and durability can be achieved at a high level.

The content of the silicon phase in the Si-containing particles may be, for example, 30 mass% or more and 90 mass% or less, 40 mass% or more and 75 mass% or less, or 50 mass% or more and 60 mass% or less. In this case, initial charge and discharge efficiency of secondary batteries easily improves, and the degree of expansion and contraction of the Si-containing particles during charging and discharging can be easily adjusted. Adjusting the amount of the silicon phase by simply dispersing the silicon phase in the silicon compound phase to be in the above-described range is easy.

The content of the silicon nitride phase in the Si-containing particles may be, for example, 2 mass% or more and 25 mass% or less, or 2.5 mass% or more and 15 mass% or less. In this case, charge and discharge cycle characteristics of secondary batteries easily improve and the capacity of the Si-containing particles can be easily adjusted. Adjusting the amount of the silicon nitride phase by simply dispersing the silicon nitride phase in the silicon compound phase to be in the above-described range is easy.

The contents of the silicon compound phase, the silicon phase, and the silicon nitride phase in the Si-containing particles can be quantified by, for example, using Si-NMR. In the NMR spectrum obtained by a 29Si-NMR measurement of the Si-containing particles, the peak intensities assigned to the silicon compound phase, the silicon phase, and the silicon nitride phase are observed. Each of the components can be quantified from these peak intensities. For the standard substance necessary for the quantification, a mixture containing a silicon compound phase (here, a silicon oxide phase and a silicate phase), silicon, and silicon nitride with a known Si content at a predetermined ratio may be used.

Preferable Si-NMR measurement conditions are shown below.

### <Si-NMR measurement conditions>

Measuring equipment: Solid-state nuclear magnetic resonance spectrometer (INOVA 400) manufactured by Varian Medical Systems
Probe: Varian 7 mm CPMAS-2
MAS: 4.2 kHz
MAS speed: 4 kHz
Pulse: DD (45° pulse + signal acquisition time 1H decoupled)
Repetition time: 1200 sec to 3000 sec
Observation width: 100 kHz
Observation center: -near 100 ppm
Signal acquisition time: 0.05 sec
Accumulation count: 560
Sample volume: 207.6 mg

At least a portion of the surface of the Si-containing particles may be coated with a conductive material. The silicon compound phase has poor electron conductivity, and therefore electrical conductivity of the Si-containing particles tends to be low. However, by coating the surface of the Si-containing particles with a conductive material to form a conductive layer, electrical conductivity of the Si-containing particles can be dramatically increased. A carbon material is a preferable conductive material.

Preferably, the conductive layer thickness is thin enough that it does not substantially affect the average particle size of the Si-containing particles. Preferably, the conductive layer thickness is, in view of securing electrical conductivity and diffusivity of lithium ions, 1 nm or more and 200 nm or less, more preferably 5 nm or more and 100 nm or less. The conductive layer thickness can be measured by cross-sectional observation of Si-containing particles using SEM or TEM (transmission electron microscope).

For the carbon material (conductive material), for example, amorphous carbon, graphite, and the like may be used. Examples of the amorphous carbon include carbon black, coal, coke, charcoal, and activated carbon. Examples of the graphite include natural graphite, artificial graphite, and graphitized mesophase carbon particles. **In** particular, in view of its low hardness and buffering effects on the silicon phase that goes through volume changes by charge and discharge, amorphous carbon is preferable. The amorphous carbon may be graphitizable carbon (soft carbon), or non-graphitizable carbon (hard carbon). Examples of the carbon black include acetylene black and Ketjen black.

In the Si-containing particles, a plurality of primary particles including the silicon compound phase, the silicon phase, and the silicon nitride phase are bonded to form secondary particles. The average particle size of the secondary particles is, for example, 1 µm or more and 25 µm or less, or may be 4 µm or more and 15 µm or less. In such a particle size range, the stress due to the volume change of the Si-containing particles along with charge and discharge can be relieved easily, and excellent cycle characteristics can be obtained easily.

The average particle size of the Si-containing particles means the particle size at which cumulative volume is 50% in the particle size distribution (volume average particle size) measured by a laser diffraction scattering method. For example, "LA-750" manufactured by Horiba Corporation can be used as the measuring device. When the Si-containing particle surface is coated with the conductive layer, the conductive layer thickness is substantially small to a degree that does not affect the average particle size of the Si-containing particles, and therefore the average particle size of the Si-containing particles having the conductive layer may be regarded as the average particle size of the Si-containing particles.

The Si-containing particles can be taken out from a battery by the following technique. A battery in a completely discharged state is disassembled and the negative electrode including the Si-containing particles is taken out. The negative electrode is washed with anhydrous ethyl methyl carbonate or dimethyl carbonate, to remove the components of the nonaqueous electrolyte. The negative electrode has a negative electrode current collector and a negative electrode mixture layer supported on the surface thereof, as described later. Next, the negative electrode mixture layer is peeled off from the negative electrode current collector and ground in a mortar to obtain a sample powder. Then, the sample powder is dried in a dry atmosphere for 1 hour, and soaked in a softly boiled 6M hydrochloric acid for 10 minutes, to remove the components derived from substances other than the Si-containing particles. Next, the sample powder is washed with ion-exchanged water, filtered off, and dried at 200°C for 1 hour. Afterwards, in an oxygen atmosphere, only Si-containing particles can be isolated by heating to 900°C to remove the conductive layer.

The completely discharged state is a state where, setting the rated capacity of the battery as C, a battery is discharged until, for example, its state of charge (SOC: State of Charge) is 0.1 × C or less (depth of discharge (DOD) is 90% or more).

### <Silicon phase>

The silicon phase is a phase of silicon (Si) simple substance, and repeats storing and releasing of lithium ions along with charging and discharging of a battery. The capacity can be developed by the Faradaic reaction involving the silicon phase. The silicon phase has a high capacity, and therefore the degree of expansion and contraction involved with charge and discharge is high. The silicon phase is dispersed in the silicon compound. Therefore, the stress from expansion and contraction of the silicon phase is relieved. The silicon phase may have a particulate phase, or a netlike phase.

The silicon phase is formed of a single or a plural crystallites. The silicon phase may have a crystallite size of 30 nm or less. When the silicon phase has a crystallite size of 30 nm or less, the volume change due to expansion and contraction of the silicon phase involved with charge and discharge can be made small, and charge and discharge cycle characteristics can be further improved. For example, gaps are hardly created around the silicon phase at the time of silicon phase contraction. By keeping the contact between the silicon phase and the silicon compound phase around the silicon phase, isolation of the silicon phase is suppressed, and decrease in charge and discharge efficiency is suppressed. The lower limit of the crystallite size of the silicon phase is not particularly limited, but is, for example, 5 nm.

The crystallite size of the silicon phase is more preferably 2 nm or more and 30 nm or less, and even more preferably 2 nm or more and 20 nm or less. When the crystallite size of the silicon phase is 20 nm or less, expansion and contraction of the silicon phase can be leveled. With the leveled expansion and contraction, less fine cracks are caused in the silicon phase, and charge and discharge cycle characteristics can easily improve.

The crystallite size of the silicon phase can be calculated by the Scherrer equation based on the half-width in the diffraction peak assigned to the Si (111) plane of the X-ray diffraction (XRD) spectrum of the silicon phase (simple substance Si).

When the silicon phase is a particulate phase, the average particle size of the silicon phase may be 200 nm or less, or 50 nm or less. By micronizing the silicon particles in this manner, the volume change during charging and discharging is made small, and structural stability of the Si-containing particles improves. The average particle size of the silicon phase can be measured by using the Si-containing particles taken out from the negative electrode in a completely discharged state.

The average particle size of the silicon phase can be measured by cross sectional observation on the Si-containing particles using SEM or TEM (transmission electron microscope). Specifically, the maximum diameters of arbitrarily selected 100 particles of the silicon phase are averaged.

### <Silicon nitride phase>

The silicon nitride phase is dispersed in the silicon compound phase. The silicon nitride phase is a phase of a compound having a covalent bond of Si element and N element. The silicon nitride phase may have a particulate phase.

The silicon nitride phase is an inactive phase that does not go through the Faradic reaction with lithium, and does not exhibit capacity. The silicon nitride phase barely goes through volume changes even during charging and discharging. A part of the silicon nitride phase may react with Li in a trace amount, and at that time, may exhibit a trace amount of capacity.

The silicon nitride phase may be dispersed homogeneously in the silicon compound phase, or may be locally present at the surface layer portion of the Si-containing particles. By the local presence of the silicon nitride phase at the surface layer portion, erosion of the silicon compound phase at the surface layer portion that is susceptible to erosion can be effectively suppressed. Meanwhile, when the silicon nitride phase is dispersed in the silicon compound phase (i.e., Si-containing particles) homogeneously, the erosion of silicon compound phase at a deeper portion of the Si-containing particles is also suppressed. For example, when the Si-containing particles crack, the deeper portion is exposed. Even in such a case, if the silicon nitride phase is present at a deeper portion of the silicon compound phase as in the surface layer portion, erosion does not easily progress.

The Si element or N element at the surface layer portion of the silicon nitride phase may be bonded (e.g., covalent bond) to the constituent element (e.g., O element, Li element, etc.) of the silicon compound phase. By forming such a bond, the silicon nitride phase is stabilized in the silicon compound phase. It is considered that such a silicon nitride phase strongly exhibits effects of suppressing erosion of the silicon compound phase. In the Si-containing particles, for example, a Si-N-X (X is O element, Li element, etc.) bond, a Si-O-N bond, a Li-Si-O-N bond, and the like may be formed. For example, the presence of the Si-O-N bond can be checked with the XPS measurement, the XANES measurement, and the like.

The above-described bonds including three or more elements tends to be formed at an interface between the silicon nitride phase and the silicon compound phase. Most of the silicon nitride phase does not disappear due to reactions with the silicon compound phase, and the silicon nitride phase of a fine bulk state may always be present.

When the silicon nitride phase is a particulate phase, the average particle size of the silicon nitride phase may be 200 nm or less, or 50 nm or less. By micronizing the silicon nitride particles in this manner, the effects of suppressing deterioration of the silicon compound phase are enhanced. The average particle size of the silicon nitride phase can be measured by using the Si-containing particles taken out from the negative electrode in a completely discharged state.

The average particle size of the silicon nitride phase can be measured by cross sectional observation on the Si-containing particles using SEM or TEM (transmission electron microscope). Specifically, the maximum diameters of arbitrarily selected 100 particles of the silicon nitride phase are averaged.

The NMR spectrum obtained by a 29Si-NMR measurement of the Si-containing particles may have at least one peak in a range of -40 ppm to -50 ppm. The NMR spectrum may have at least two peaks in the range of -40 ppm to -50 ppm. In this case, the Si-containing particles are determined to include Si₃N₄ as the silicon nitride phase.

The XRD spectrum obtained by an X-ray diffraction measurement of the Si-containing particles may have at least two peaks in a range of 2θ = 34° to 36°. In this case, the Si-containing particles are determined to include Si₃N₄ as the silicon nitride phase.

The peak assigned to silicon nitride may have the height of 2% or more of that of the peak assigned to Si in the range of 2θ = 27° to 29°. In this case, the silicon nitride phase includes a sufficient amount of Si₃N₄. The mass ratio of the silicon nitride phase relative to the total of the silicon compound phase and the silicon nitride phase included in the Si-containing particles is large; for example, it can be 6 mass% or more.

### <Silicon compound phase>

The silicon compound phase includes at least one of a silicon oxide phase and a silicate phase. The silicon oxide phase is formed of a compound of Si and O. The compound of Si and O may be SiO₂. That is, the main component (e.g., 95 to 100 mass%) of the silicon oxide phase may be silicon dioxide. The silicate phase is composed of a compound including a metal element, silicon (Si), and oxygen (O). The metal element is not particularly limited, and by at least including lithium, for example, lithium ions can go in and out of the silicate phase easily. That is, the silicate phase preferably includes at least lithium silicate. Of the silicon oxide phase and the silicate phase, the silicate phase is more preferable in view of a smaller irreversible capacity.

Lithium silicate is a silicate including lithium (Li), silicon (Si), and oxygen (O). The atomic ratio of O to Si in the lithium silicate: O/Si is, for example, larger than 2 and less than 4. When the O/Si ratio is larger than 2 and less than 4 (z in the formula described later is 0 < z < 2), it is advantageous in terms of stability of the silicate phase and lithium ion conductivity. Preferably, O/Si ratio is larger than 2 and less than 3. The atomic ratio of Li to Si in the lithium silicate: Li/Si is, for example, larger than 0 and less than 4.

The composition of lithium silicate can be represented by a formula: Li_{2z}SiO_{2+z} (0 < z < 2). In view of stability, workability, and lithium ion conductivity, etc., z preferably satisfies a relation 0 < z < 1, and z = 1/2 is more preferable. The lithium silicate satisfying z = 1/2 can be represented by Li₂Si₂O₅. The lithium silicate preferably includes Li₂Si₂O₅ as a main component, and preferably, Li₂Si₂O₅ is the main component of the silicate phase as a whole. The "main component" means a component that shares 50 mass% or more of the lithium silicate as a whole or the silicate phase as a whole, and may share 70 mass% or more of them.

The silicate phase may further include, in addition to Li, Si, and O, other element M. The silicate phase including the element M improves chemical stability of the silicate phase and lithium ion conductivity, or suppresses side reactions based on contact between the silicate phase and the nonaqueous electrolyte.

For the element M, for example, at least one selected from the group consisting of sodium (Na), potassium (K), magnesium (Mg), barium (Ba), zirconium (Zr), niobium (Nb), tantalum (Ta), vanadium (V), titanium (Ti), phosphorus (P), bismuth (Bi), zinc (Zn), tin (Sn), lead (Pb), antimony (Sb), cobalt (Co), fluorine (F), tungsten (W), aluminum (Al), boron (B), and a rare-earth element can be used. In view of durability against the nonaqueous electrolyte and structural stability of the silicate phase, the element M preferably includes at least one selected from the group consisting of Zr, Ti, P, Al, and B.

The rare-earth elements may improve charge and discharge efficiency of initial charge and discharge cycle. The rare-earth elements may be any of scandium (Sc), yttrium (Y), and lanthanoid elements. Preferably, the rare-earth element includes at least one selected from the group consisting of lanthanum (La), cerium (Ce), praseodymium (Pr), and neodymium (Nd). In view of improvement in lithium ion conductivity, in particular, the rare-earth element preferably includes La. Preferably, La shares 90 atom% or more and 100 atom% or less of the rare-earth element as a whole.

The silicate phase may further include a trace amount of elements such as iron (Fe), chromium (Cr), nickel (Ni), manganese (Mn), copper (Cu), and molybdenum (Mo).

The element M may form a compound. The compound may be, depending on the kind of element M, for example, a silicate of element M, or an oxide of element M.

In the silicate phase, the amount of the element M contained relative to a total amount of elements other than oxygen is, for example, 1 mol % or more and 40 mol % or less.

The amounts of Li, Si, and the element M contained in the silicate phase can be measured by analyzing cross sections of, for example, the negative electrode mixture layer.

First, a battery in a completely discharged state is disassembled, and the negative electrode is taken out: the negative electrode is washed with anhydrous ethyl methyl carbonate or dimethyl carbonate to remove the nonaqueous electrolyte component, and dried. Then, cross sections of the negative electrode mixture layer are obtained using a cross section polisher (CP). Next, a scanning electron microscopy (SEM) is used to observe the cross-sections of the negative electrode mixture layer.

Then, the amount of each of the elements contained can be determined by any of the following methods. The composition of the silicate phase is calculated from the amount of each of the elements contained.

### <EDX>

From the cross sectional image of the reflected electron image of the negative electrode mixture layer, 10 Si-containing particles with the maximum diameter of 5 µm or more are randomly selected, and the respective particles are analyzed by element mapping by energy-dispersive X-ray (EDX). The area ratio of the target element is calculated using an image analysis software. The observation magnification is desirably 2000 to 20000 times. The measured values of the area ratio of the predetermined elements contained in 10 particles are averaged. Based on the obtained average value, the amount of the target element contained is calculated.

Preferable cross-sectional SEM-EDX analysis measurement conditions are shown below.

### <SEM-EDX measurement conditions>

Processing Equipment: SM-09010 (Cross Section Polisher) manufactured by JEOL
Processing conditions: Acceleration voltage 6kV
Electric current value: 140 µA
Degree of vacuum: 1 × 10⁻³ to 2 × 10⁻³ P a
Measurement device: electron microscope SU-70 manufactured by HITACHI
Acceleration voltage at analysis: 10kV
Field: Free mode
Probe electric current mode: Medium
Probe electric current range: High
Anode Ap.: 3
OBJ Ap.: 2
Analysis area: 1 µm square
Analysis software: EDAX Genesis
CPS: 20500
Lsec: 50
Time constant: 3.2

### <AES>

From the cross sectional image of the reflected electron image of the negative electrode mixture layer, 10 Si-containing particles with the maximum diameter of 5 µm or more are randomly selected, and the respective particles are subjected to qualitative/quantitative analysis using an Auger electron spectroscopy (AES) analyzer (e.g., JAMP-9510F manufactured by JEOL Ltd.). The measurement conditions may be, for example, an acceleration voltage of 10 kV, a beam electric current of 10 nA, and an analysis region of 2θ µmφ. The amounts of the predetermined elements contained in 10 particles are averaged to calculate the content.

The EDX analysis and AES analysis are performed for an inner side range from the peripheral end edge of the cross section of the Si-containing particles by 1 µm or more.

### <ICP>

The sample of the Si-containing particles is dissolved completely in a heated acid solution (mixed acid of hydrofluoric acid, nitric acid, and sulfuric acid), and the carbon of the solution residue is filtered and removed. Afterwards, the resulting filtrate is analyzed by inductively coupled plasma-atomic emission spectrometry (ICP) to determine the spectral intensities of the respective elements. Then, a standard solution of a commercially available element is used to create a calibration curve, and the amount of element contained in the Si-containing particles is calculated.

The quantitative analysis of each of the elements can also be performed by using an electron microanalyzer (EPMA), laser ablation ICP mass spectroscopy (LA-ICP-MS), X-ray photoelectron spectroscopy (XPS), and the like.

The B content, the Na content, the K content, and the Al content of the Si-containing particles can be determined by quantitative analysis according to JIS R3105 (1995) (Methods for chemical analysis of borosilicate glasses).

The carbon content of the Si-containing particles can be measured using a carbon/sulfur analyzer (e.g., EMIA-520 available from HORIBA, Ltd.). A sample is weighed out on a magnetic board, to which an auxiliary agent is added. The sample is inserted into a combustion furnace (carrier gas: oxygen) heated to 1350°C, and the amount of carbon dioxide gas generated during combustion is detected by infrared absorption spectroscopy. A calibration curve is obtained using carbon steel (carbon content: 0.49%) available from Bureau of Analysed Samples. Ltd., from which a carbon content of the sample is determined (a high-frequency induction heating furnace combustion and infrared absorption method).

The oxygen content of the Si-containing particles can be measured using an oxygen/nitrogen/hydrogen analyzer (e.g., EGMA-830, available from HORIBA, Ltd.). A sample is placed in a Ni capsule and put together with Sn pellets and Ni pellets serving as flux, into a carbon crucible heated at a power of 5.75 kW, to detect a produced carbon monoxide gas. From a calibration curve obtained using a standard sample Y2O3, the oxygen content of the sample is determined (an inert gas melting and non-dispersive infrared absorption method).

In the Si-containing particles, silicon oxide, the silicate phase, the silicon phase, and the silicon nitride phase are present. The Si content obtained by the above-described method is a total of the amount of Si forming the silicon phase, the amount of Si in the silicon compound phase, and the amount of Si in the silicon nitride phase. The amount of the Si element included in the Si-containing particles is distributed to the silicon oxide phase, silicate phase, silicon phase, and silicon nitride phase using the results of the quantitative analysis with Si-NMR. For the standard substance necessary for the quantification, a mixture containing a silicon oxide phase, a silicate phase, a silicon phase, and silicon nitride with a known Si content respectively at a predetermined ratio may be used.

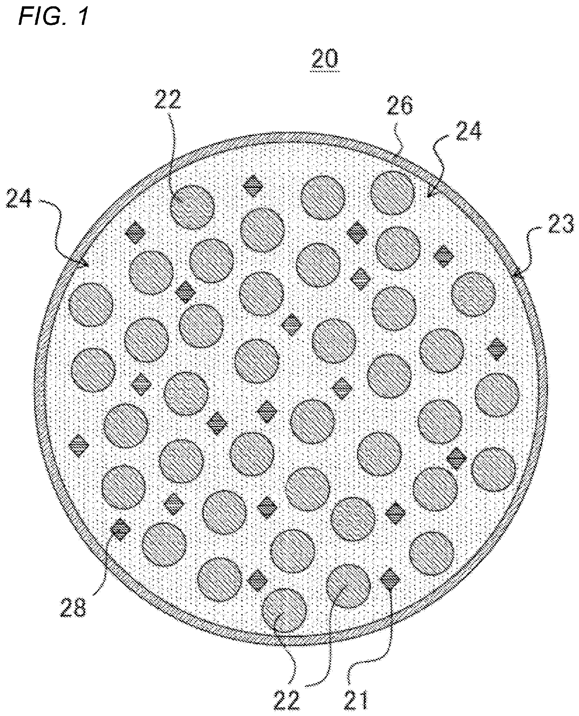

FIG. 1 schematically shows a cross section of an example of the Si-containing particle 20. The Si-containing particle 20 includes a mother particle 23 composed of a secondary particle in which a plurality of primary particles 24 are aggregated. The mother particle 23 (primary particles 24) includes a silicon compound phase 21, and a silicon phase 22 and a silicon nitride phase 28 dispersed in the silicon compound phase 21. The mother particle 23 has a sea-island structure, in which fine silicon phases 22 and silicon nitride phases 28 are dispersed in a matrix of the silicon compound phase 21. The surface of the mother particle 23 is coated with a conductive layer 26.

The mother particle 23 may include other components in addition to the silicon compound phase 21, the silicon phase 22, and the silicon nitride phase.

### <Production method of Si-containing particles>

In the following, the Si-containing particles including the silicate phase (particularly lithium silicate phase), and the silicon phase and silicon nitride phase each dispersed in the silicate phase are described as an example. Such Si-containing particles are produced by a production method including, for example, a first step to a fourth step below.

(First step) First step for obtaining a raw material silicate in which silicon nitride is dispersed.
(Second step) A step in which, after the first step, the raw material silicate in which silicon nitride is dispersed and a raw material silicon are formed into a composite, thereby dispersing the silicon phase in the silicate phase in which the silicon nitride is dispersed to obtain an intermediate.
(Third step) A step in which the intermediate is heat treated to obtain a sintered product including a silicate phase, a silicon phase dispersed in the silicate phase, and a silicon nitride phase dispersed in the silicate phase.
(Fourth step) A step in which the sintered product is ground to obtain Si-containing particles.

### [First step]

The first step includes, for example, a step 1a, in which silicon dioxide, a lithium compound, and silicon nitride are mixed to obtain a mixture, and a step 1b, in which the mixture is baked to obtain a raw material silicate in which silicon nitride is dispersed.

In the step 1a, silicon nitride may be formed into fine particles using a grinder such as a ball mill while stirring the mixture.

The baking in the step 1b may be performed, for example, in an oxidizing atmosphere or a nitriding atmosphere. The baking temperature in the step 1b is preferably 400°C or more and 1200°C or less, more preferably 800°C or more and 1100°C or less.

Examples of the lithium compound include lithium carbonate, lithium oxide, lithium hydroxide, and lithium hydride. The lithium compound may be used singly, or two or more kinds thereof may be used in combination.

For the silicon nitride, for example, Si₃N₄ may be used.

### [Second step]

The second step has, for example, a step of grinding a mixture of the raw material silicate in which silicon nitride is dispersed and a raw material silicon while applying a shearing force to the mixture to obtain an intermediate of fine particles. Here, for example, the raw material silicate in which silicon nitride is dispersed may be mixed with the raw material silicon at a predetermined mass ratio, and the mixture may be formed into fine particles while stirring using a grinder such as a ball mill.

As the raw material silicon, coarse particles of silicon having an average particle size of about several µm to several tens of µm may be used. Preferably, the silicon particles finally obtained are adjusted so that the crystallite size calculated by the Sheller's equation from the half-width of the diffraction peak assigned to the Si (111) plane of the X-ray diffraction (XRD) pattern is 5 nm or more and 50 nm or less.

The second step is not limited to the above. For example, without using a grinder, silicon nanoparticles and nanoparticles of the raw material silicate may be synthesized and mixed.

### [Third step]

Third step has, for example, a step in which the intermediate formed into fine particles is baked while applying a pressure with a hot press and the like to produce a sintered product. The intermediate is baked, for example, in an inert atmosphere (e.g., atmosphere of argon, nitrogen, and the like). The baking temperature is preferably 450°C or more and 1000°C or less. In the above-described temperature range, fine silicon particles can be easily dispersed in the silicate phase with a low crystallinity. The raw material silicate is stable in the above-described temperature range, and barely reacts with silicon. The baking temperature is preferably 550°C or more and 900°C or less, more preferably 650°C or more and 850°C or less. The baking time is, for example, 1 hour or more and 10 hours or less.

### [Fourth step]

The fourth step is a step in which the sintered product is ground to give a desired particle size distribution, to obtain Si-containing particles including a silicate phase, a silicon phase dispersed in the silicate phase, and a silicon nitride phase dispersed in the silicate phase. The Si-containing particles are ground to give, for example, an average particle size of 1 to 25 µm.

### [Conductive layer formation step]

As necessary, a conductive layer is formed on the Si-containing particles. For the raw materials of the conductive material forming the conductive layer, for example, coal pitch or coal tar pitch, petroleum pitch, phenol resin, and the like may be used. By mixing a raw material of the conductive material and the Si-containing particles, and baking the mixture to carbonize the raw material of the conductive material, a conductive layer coating at least a portion of the surface of the Si-containing particles is formed.

The baking of the mixture of the raw material of the conductive material and the Si-containing particles is conducted, for example, in an inert atmosphere (e.g., atmosphere of argon, nitrogen, and the like). The baking temperature is preferably 450°C or more and 1000°C or less. In the above-described temperature range, a conductive layer with a high electrical conductivity can be easily formed on the low crystalline silicate phase. The baking temperature is preferably 550°C or more and 900°C or less, more preferably 650°C or more and 850°C or less. The baking time is, for example, 1 hour or more and 10 hours or less.

The conductive layer may be formed on the Si-containing particles by other methods. For example, the conductive layer may be formed by a gas phase method such as a CVD method, by allowing hydrocarbon gas to react on the surface of the Si-containing particles. For the hydrocarbon gas, acetylene, methane, and the like may be used. The conductive layer may also be formed by mixing carbon black with the Si-containing particles to attach a precursor of the conductive layer on the surface of the Si-containing particles, and thereafter, baking the precursor with the Si-containing particles.

### <Negative electrode>

The negative electrode includes, for example, a negative electrode current collector and a negative electrode mixture layer formed on a surface of the negative electrode current collector and containing a negative electrode active material. The negative electrode mixture layer can be formed by applying a negative electrode slurry containing a negative electrode mixture dispersed in a dispersion medium, onto a surface of the negative electrode current collector, and drying the slurry. The dried film may be rolled, if necessary. The negative electrode mixture layer may be formed on one surface of the negative electrode current collector, or on both surfaces thereof.

The negative electrode mixture contains, as the negative electrode active material, the above-described Si-containing particles as an essential component, and as an optional component, a binder, a conductive agent, a thickener, and the like can be contained.

The negative electrode active material may further include another active material that electrochemically stores and releases lithium ions. Another active material may be second Si-containing particles having a carbon phase and a silicon phase dispersed in the carbon phase, or may be a carbon based active material not containing a silicon phase. **In** particular, a carbon based active material not including a silicon phase is preferable. Since the volume of the Si-containing particles expands and contracts with charging and discharging, when the ratio thereof in the negative electrode active material increases, contact failure between the negative electrode active material and the negative electrode current collector tends to occur with charging and discharging. Meanwhile, by using the Si-containing particles and the carbon based active material not including a silicon phase in combination, a high capacity of the silicon phase can be given to the negative electrode, while achieving excellent cycle characteristics. The Si-containing particles share, for example, preferably 0.5 to 15 mass%, more preferably 1 to 5 mass% of a total of the Si-containing particles and the carbon based active material not including the silicon phase. This allows achievement in both higher capacity and higher cycle characteristics easily.

As the carbon based active material not including a silicon phase, for example, graphite, graphitizable carbon (soft carbon), non-graphitizable carbon (hard carbon), and the like can be exemplified. Preferred among them is graphite, which is excellent in stability during charging and discharging and has small irreversible capacity. Graphite means a material having a graphite type crystal structure, and includes, for example, natural graphite, artificial graphite, graphitized mesophase carbon particles, and the like. The carbon-based active material may be used singly, or two or more kinds may be used in combination.

For the negative electrode current collector, a non-porous conductive substrate (metal foil, etc.), or a porous conductive substrate (mesh-body, net-body, punched sheet, etc.) is used. Examples of the material of the negative electrode current collector may be stainless steel, nickel, a nickel alloy, copper, and a copper alloy. The negative electrode current collector may have a thickness of, in view of balance between strength and weight savings of the negative electrode, preferably 1 to 50 µm, more preferably 5 to 20 µm, but it is not limited thereto.

Examples of the binder include fluororesin, polyolefin resin, polyamide resin, polyimide resin, vinyl resin, styrene-butadiene copolymer rubber (SBR), polyacrylic acid, and derivatives thereof. These may be used singly or in combination of two or more. Examples of the conductive agent include carbon black, conductive fibers, fluorinated carbon, and organic conductive materials. These may be used singly or in combination of two or more. Examples of the thickeners include carboxymethyl cellulose (CMC) and polyvinyl alcohol. These may be used singly or in combination of two or more.

Examples of the dispersion medium include water, alcohol, ether, N-methyl-2-pyrrolidone (NMP), or a mixture solvent thereof.

### <Positive electrode>

The positive electrode includes a positive electrode current collector and a positive electrode mixture layer formed on a surface of the positive electrode current collector and containing a positive electrode active material. The positive electrode active material layer contains a positive electrode active material as an essential component, and as an optional component, a binder, a conductive agent, and the like can be contained. For the binder, the conductive agent, and the thickener, known materials can be used.

For the positive electrode active material, for example, a lithium transition metal composite oxide may be used. For example, LiₐCoO₂, LiₐNiO₂, LiₐMnO₂, LiₐCo_{b}Ni_{1-b}O₂, LiₐCo_{b}Me_{1-b}O_{c}, LiₐNi_{1-b}Me_{b}O_{c}, LiₐMn₂O₄, LiₐMn_{2-b}Me_{b}O₄, LiMePO₄, Li₂MePO₄F (Me is at least one selected from the group consisting of Na, Mg, Sc, Y, Mn, Fe, Co, Ni, Cu, Zn, Al, Cr, Pb, Sb, and B). Here, a = 0 to 1.2, b = 0 to 0.9, and c = 2.0 to 2.3. Note that the value "a" indicating the molar ratio of lithium is increased or decreased by charging and discharging.

In view of higher capacity, for the positive electrode active material, a lithium transition metal composite oxide (hereinafter, also referred to as composite oxide N) including lithium and Ni, and having a layered rock salt type crystal structure may be used. Nickel is advantageous for a higher capacity and a lower cost. The Ni ratio in the metal element other than Li included in the composite oxide N may be 50 atom% or more, 68.5 atom% or more, 80 atom% or more, or 90 atom% or more.

The composite oxide N may be represented by, for example, a general formula: Li_{α}Ni_{1-x1-x2-y-z}Coₓ₁Mnₓ₂Al_{y}Me_{z}O_{2+β}. Cobalt is advantageous for extending the life of a battery. Aluminum is advantageous in improving thermal stability. The general formula satisfies 0.95 ≤ α ≤ 1.05, 0 ≤ x1 ≤ 0.1, 0 ≤ x2 ≤ 0.5, 0 ≤ y ≤ 0.1, 0 ≤ z ≤ 0.1, 0.5 ≤ 1-x1-x2-y-z, and -0.05 ≤ β ≤ 0.05, and Me is an element other than Li, Ni, Mn, Al, Co, and oxygen. The value "a" indicating the molar ratio of lithium is increased or decreased by charging and discharging.

In view of stabilization of the crystal structure of the composite oxide N, for Me, at least one selected from the group consisting of Nb, Zr, B, Mg, Fe, Cu, Zn, Sn, Na, K, Ba, Sr, Ca, W, Mo, Si, Ti, Fe, and Cr may be used.

Examples of the material of the positive electrode current collector may be stainless steel, aluminum, an aluminum alloy, and titanium.

### <Nonaqueous electrolyte>

The nonaqueous electrolyte is not particularly limited, and may be a liquid electrolyte. The liquid electrolyte contains a solvent and a solute dissolved in the solvent. The solute is an electrolytic salt that ionically dissociates in liquid electrolytes. The solute may contain, for example, a lithium salt. The component of the liquid electrolyte other than the solvent and solute is additives. The liquid electrolyte may contain various additives.

For the solvent, an aqueous solvent or a nonaqueous solvent is used. For the nonaqueous solvent, for example, cyclic carbonate, chain carbonate, cyclic carboxylate, chain carboxylate, and the like are used. Examples of the cyclic carbonate include propylene carbonate (PC), ethylene carbonate (EC), and vinylene carbonate (VC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl acetate, ethyl acetate, propyl acetate, methyl propionate (MP), ethyl propionate (EP), and the like. The non-aqueous solvent may be used singly, or two or more kinds thereof may be used in combination.

Examples of the lithium salt include a lithium salt of chlorine containing acid (LiClO₄, LiAlCl₄, LiB₁₀Cl₁₀, etc.), a lithium salt of fluorine containing acid (LiPF₆, LiPF₂O₂, LiBF₄, LiSbF₆, LiAsF₆, LiCF₃SO₃, LiCF₃CO₂, etc.), a lithium salt of fluorine containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.) and the like. The lithium salt may be used singly, or two or more kinds thereof may be used in combination.

The liquid electrolyte may have a lithium salt concentration of 1 mol/liter or more and 2 mol/liter or less, or 1 mol/liter or more and 1.5 mol/liter or less. By adjusting the lithium salt concentration to be within the above-described range, a liquid electrolyte with excellent ion conductivity and suitable viscosity can be produced. However, the lithium salt concentration is not limited to the above-described range.

### <Separator>

It is desirable to interpose a separator between the positive electrode and the negative electrode. The separator is excellent in ion permeability and has suitable mechanical strength and electrically insulating properties. For the separator, a microporous thin film, a woven fabric, and a nonwoven fabric can be used. For the material of the separator, a polyolefin such as polypropylene or polyethylene is preferred.

In an example structure of the secondary battery, an electrode group and a liquid electrolyte are accommodated in an outer package, and the electrode group has a positive electrode and a negative electrode wound with a separator interposed therebetween. However, the structure is not limited thereto, and other forms of electrode groups may be used. For example, it can be a laminate electrode group, in which a positive electrode and a negative electrode are laminated with a separator interposed therebetween. The batteries may be of any form, for example, a cylindrical type, a prismatic type, a coin type, a button type, a laminated type, etc.

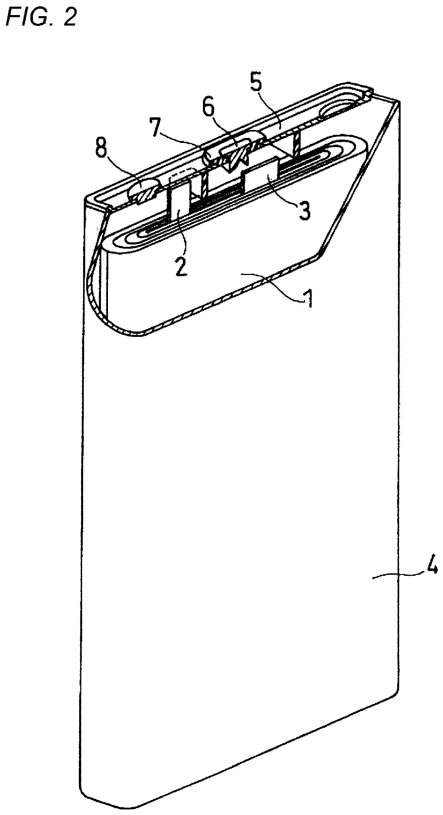

In the following, a structure of a rectangular nonaqueous secondary battery as an example of a secondary battery of the present invention is described with reference to FIG. 2.

The battery includes a bottomed rectangular battery case 4 and an electrode group 1 and a liquid electrolyte (not shown) housed in the battery case 4. The electrode group 1 has a negative electrode in the form of a long strip, a positive electrode in the form of a long strip, and a separator interposed therebetween. The negative electrode current collector of the negative electrode is electrically connected to the negative electrode terminal 6 provided in a sealing plate 5 through a negative electrode lead 3. The negative electrode terminal 6 is insulated from the sealing plate 5 with a resin-made gasket 7. A positive electrode current collector of the positive electrode is electrically connected to a rear face of the sealing plate 5 through a positive electrode lead 2. That is, the positive electrode is electrically connected to the battery case 4 also serving as a positive electrode terminal. The periphery of the sealing plate 5 is fitted to the open end of the battery case 4, and the fitting portion is laser welded. The sealing plate 5 has an injection port for a non-aqueous electrolyte, and is sealed with a sealing plug 8 after injection.

The present disclosure will be described in detail below with reference to Examples and Comparative Examples. The present disclosure, however, is not limited to the following Examples.

### <Example 1>

### [Si-containing particles preparation]

### [First step]

Silicon dioxide (SiO₂), Li₂CO₃, and silicon nitride (Si₃N₄) were mixed, and the mixture was baked in nitrogen at 800°C for 10 hours, thereby producing lithium silicate in which silicon nitride is dispersed. The lithium silicate in which silicon nitride is dispersed was ground to give an average particle size of 10 µm. The mass ratio of the silicon nitride phase relative to a total of the lithium silicate phase and the silicon nitride phase was set to 6.7 mass%.

### [Second step]

Silicate in which silicon nitride is dispersed was mixed with a raw material silicon (3N, average particle size of 10 µm). In the mixture, the mass ratio of the silicate and the raw material silicon was set to 42: 58.

The mixture was put into a pot (made of SUS, volume: 500 mL) of a planetary ball mill (manufactured by Fritsch Co., Ltd., P-5), and 24 balls made of SUS (diameter: 20 mm) were placed in the pot. The lid was closed, and the mixture was subjected to grinding at 200 rpm for 50 hours in an inert atmosphere.

### [Third step]

Next, the powdery mixture was taken out in an inert atmosphere, and baked for 4 hours at 600°C in an inert atmosphere with a pressure applied by a hot press to obtain a sintered product of the mixture.

### [Fourth step]

Then, the produced sintered product was ground, passed through a mesh of 40 µm, thereby producing Si-containing particles.

### [Si-containing particles analysis]

The mass ratio of the silicon nitride phase relative to a total of the lithium silicate phase and the silicon nitride phase included in the Si-containing particles determined by the above described method was 6.7 mass%.

The content of the silicon phase in the Si-containing particles determined by the above described method was 58 mass%.

The content of the silicon nitride phase in the Si-containing particles determined by the above described method was 2.8 mass%.

The silicon phase in the Si-containing particles had a crystallite size determined by the above described method of 15 nm.

The silicon phase was particulate, and the silicon phase had an average particle size determined by the above described method of 20 nm.

The silicon nitride phase was particulate, and had an average particle size determined by the above described method of 100 nm.

The main component of the lithium silicate phase in the Si-containing particles determined by the above described method was Li₂Si₂O₅.

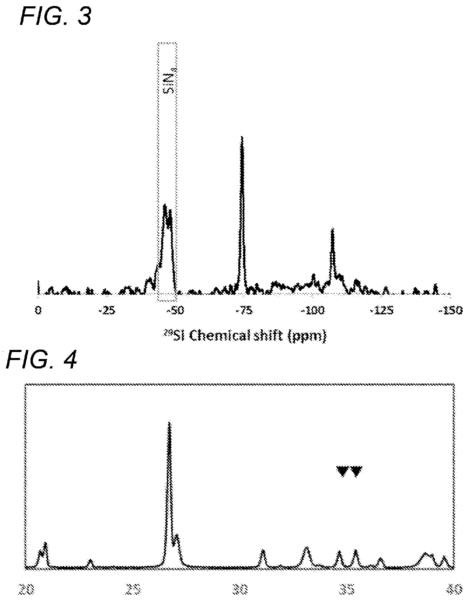

The Si-containing particles were analyzed by Si-NMR, and it was confirmed that the obtained NMR spectrum had two peaks in the range of -40 ppm to -50 ppm, and the silicon nitride phase kept Si₃N₄. FIG. 3 shows an NMR spectrum of the Si-containing particles obtained by Si-NMR measurement.

The Si-containing particles were analyzed by X-ray diffraction, and it was confirmed that the XRD spectrum had two peaks in the range of 2θ = 34° to 36°, and the silicon nitride phase kept Si₃N₄. FIG. 3 shows an XRD spectrum of the Si-containing particles. The highest peak was the peak assigned to the Si(111) plane, and the peaks marked with the black triangles are peaks assigned to Si-N.

### [Conductive layer formation step]

Next, 100 parts by mass of the Si-containing particles, and 5 parts by mass of coal tar pitch were mixed, and thereafter, the mixture was baked at 800°C in an argon atmosphere, thereby forming a conductive layer coating at least a portion of the surface of the Si-containing particles. By baking, the coal tar pitch was made into amorphous carbon. The thickness of the conductive layer was 10 nm. The mass ratio of the conductive layer relative to the total of the Si-containing particles and the conductive layer was 3 mass%.

### [Negative electrode production]

Si-containing particles having a conductive layer and graphite were mixed at a mass ratio of 5:95 and used as a negative electrode active material. To the negative electrode mixture including the negative electrode active material, Na salt of CMC, and SBR at a mass ratio of 97.5: 1: 1.5, water was added and stirred, thereby preparing a negative electrode slurry. Next, the negative electrode slurry was applied to surfaces of a copper foil so that the mass of the negative electrode mixture per 1 m² was 190 g, and the coating was dried and rolled, thereby producing a negative electrode with a negative electrode mixture layer formed on both surfaces of the copper foil with a density of 1.5 g/cm³.

### [Positive electrode production]

To a positive electrode mixture including the composite oxide N (LiNi_{0.88}Co_{0.09}Al_{0.03}O₂), acetylene black, and polyvinylidene fluoride (PVDF) at a mass ratio of 95: 2.5: 2.5, NMP was added and stirred, thereby preparing a positive electrode slurry. Next, the positive electrode slurry was applied to surfaces of an aluminum foil, and the coating was dried and rolled, thereby producing a positive electrode with a positive electrode mixture layer formed on both surfaces of the aluminum foil with a density of 3.6 g /cm³.

### [Nonaqueous electrolyte preparation]

To a solvent mixture containing EC and DEC at a volume ratio of 3:7, LiPF₆ was dissolved at a concentration of 1.0 mol /L, thereby preparing a nonaqueous electrolyte (liquid electrolyte).

### [Secondary battery production]

The positive electrode and the negative electrode to each of which tabs were attached were wound with a separator interposed therebetween, thereby producing an electrode group with the tabs positioned at the outermost periphery portion. The electrode group was inserted into an exterior body made of an aluminum laminate film, dried in vacuo at 105°C for 2 hours, and then the nonaqueous electrolyte was injected. The opening of the exterior body was sealed to obtain a battery A1 of Example 1.

### <<Example 2>>

A battery A2 of Example 2 was made in the same manner as in Example 1, except that the silicon nitride (Si₃N₄) phase was dispersed in the lithium silicate phase so that the mass ratio of the silicon nitride phase relative to a total of the lithium silicate phase and the silicon nitride phase determined by the above described method was 19.4 mass%.

### <<Comparative Example 1>>

A battery B1 of Comparative Example 1 was made in the same manner as in Example 1, except that the silicon nitride (Si₃N₄) phase was not dispersed in the lithium silicate phase.

### [Cycle test]

### <Charge>

The batteries obtained above were subjected to constant current charging until the voltage reached 4.2 V at a current of 1 It (800 mA), and thereafter, subjected to constant voltage charging at a constant voltage of 4.2 V until the current reached 1/20 It (40 mA).

### <Discharge>

Constant current discharging was performed at a current of 1 It (800 mA) until the voltage reached 2.75 V.

The pause period between charging and discharging was 10 minutes.

The charging and discharging were conducted under an environment of 25°C.

A discharge capacity C1 of the 1st cycle was determined for each battery. A discharge capacity C200 of the 200th cycle was determined, and the ratio represented by 100 × C200/C1 (%) was determined as a capacity retention rate R for each battery. Table 1 shows the obtained values for the capacity retention rate R. The higher the value of R, the better the charge and discharge cycle characteristics are.

**[Table 1]**

| Battery | Contents in Si-containing particle (mass%) | | | | R(%) |
|---|---|---|---|---|---|
| | Li₂Si₂O₅ | Si₃N₄ | Si₃N₄+Li₂Si₂O₅ | Si | |
| A1 | 39.2 | 2.8 | 42 | 58 | 77.0 |
| A2 | 33.9 | 8.1 | 42 | 58 | 81.3 |
| B1 | 42 | 0 | 42 | 58 | 75.5 |

The batteries A1 and A2 of Examples 1 and 2 had relatively high capacity retention rates compared with the battery B1 of Comparative Example 1. This is probably because deterioration of the lithium silicate phase of the Si-containing particles was suppressed by the silicon nitride phase.

### [Industrial Applicability]

The present disclosure can provide a secondary battery having a high capacity and excellent charge and discharge cycle characteristics. The nonaqueous electrolyte secondary battery according to the present invention is useful for a main power source of a mobile communication device, a portable electronic device, or the like.

### [Reference Signs List]

1: electrode group, 2: positive electrode lead, 3: negative electrode lead, 4: battery case, 5: sealing plate, 6: negative electrode terminal, 7: gasket, 8: sealing plug, 20: Si-containing particles, 21: silicon compound phase, 22: silicon phase, 23: mother particles, 24: primary particles, 26: conductive layer, 28: silicon nitride phase

## Claims

1. A negative electrode active material for a secondary battery comprising: Si-containing particles, wherein
the Si-containing particles include a silicon compound phase, a silicon phase dispersed in the silicon compound phase, and a silicon nitride phase dispersed in the silicon compound phase, and
the silicon compound phase is at least one of a silicon oxide phase and a silicate phase.

2. The negative electrode active material for a secondary battery of claim 1, wherein a mass ratio of the silicon nitride phase relative to a total of the silicon compound phase and the silicon nitride phase included in the Si-containing particles is 3 mass% or more and 25 mass% or less.

3. The negative electrode active material for a secondary battery of claim 1 or 2, wherein a content of the silicon phase included in the Si-containing particles is 30 mass% or more and 80 mass% or less.

4. The negative electrode active material for a secondary battery of any one of claims 1 to 3, wherein an NMR spectrum obtained by a 29Si-NMR measurement of the Si-containing particles has at least one peak in a range of -40 ppm to -50 ppm.

5. The negative electrode active material for a secondary battery of any one of claims 1 to 4, wherein an XRD spectrum obtained by an X-ray diffraction measurement of the Si-containing particles has at least two peaks in a range of 2θ = 34° to 36°.

6. The negative electrode active material for a secondary battery of any one of claims 1 to 5, wherein the silicon nitride phase includes Si₃N₄.

7. The negative electrode active material for a secondary battery of any one of claims 1 to 6, wherein the silicon nitride phase has an average particle size of 500 nm or less, wherein the average particle size is measured as indicated in the description.

8. The negative electrode active material for a secondary battery of any one of claims 1 to 7, wherein the silicon phase has an average particle size of 200 nm or less and a crystallite size of the silicon phase is 2 nm or more, wherein the average particle size and the crystallite size are measured as indicated in the description.

9. A secondary battery comprising a negative electrode including any one of the negative electrode active material for a secondary battery of claims 1 to 8, a positive electrode, and a nonaqueous electrolyte.

## Patentansprüche

1. Negativelektroden-Aktivmaterial für eine Sekundärbatterie, umfassend: Si-haltige Partikel, wobei
die Si-haltigen Partikel eine Siliziumverbindungsphase, eine Siliziumphase, die in der Siliziumverbindungsphase dispergiert ist, und eine Siliziumnitridphase umfassen, die in der Siliziumverbindungsphase dispergiert ist, und
die Siliziumverbindungsphase mindestens eines von einer Siliziumoxidphase und einer Silicatphase ist.

2. Negativelektroden-Aktivmaterial für eine Sekundärbatterie nach Anspruch 1, wobei ein Massenverhältnis der Siliziumnitridphase, bezogen auf eine Gesamtheit der Siliziumverbindungsphase und der Siliziumnitridphase, die in den Si-haltigen Partikeln enthalten sind, 3 Massen-% oder mehr und 25 Massen-% oder weniger beträgt.

3. Negativelektroden-Aktivmaterial für eine Sekundärbatterie nach Anspruch 1 oder 2, wobei ein Gehalt der Siliziumphase, die in den Si-haltigen Partikeln enthalten ist, 30 Massen-% oder mehr und 80 Massen-% oder weniger beträgt.

4. Negativelektroden-Aktivmaterial für eine Sekundärbatterie nach einem der Ansprüche 1 bis 3, wobei ein NMR-Spektrum, das von einer 29Si-NMR-Messung der Si-haltigen Partikel erhalten wird, mindestens eine Spitze in einem Bereich von -40 ppm bis -50 ppm aufweist.

5. Negativelektroden-Aktivmaterial für eine Sekundärbatterie nach einem der Ansprüche 1 bis 4, wobei ein XRD-Spektrum, das von einer Röntgendiffraktometriemessung der Si-haltigen Partikel erhalten wird, mindestens zwei Spitzen in einem Bereich von 2θ = 34° bis 36° aufweist.

6. Negativelektroden-Aktivmaterial für eine Sekundärbatterie nach einem der Ansprüche 1 bis 5, wobei die Siliziumnitridphase Si₃N₄ umfasst.

7. Negativelektroden-Aktivmaterial für eine Sekundärbatterie nach einem der Ansprüche 1 bis 6, wobei die Siliziumnitridphase eine durchschnittliche Partikelgröße von 500 nm oder weniger aufweist, wobei die durchschnittliche Partikelgröße gemessen wird wie in der Beschreibung angegeben.

8. Negativelektroden-Aktivmaterial für eine Sekundärbatterie nach einem der Ansprüche 1 bis 7, wobei die Siliziumphase eine durchschnittliche Partikelgröße von 200 nm oder weniger aufweist und eine Kristallitgröße der Siliziumphase 2 nm oder mehr beträgt, wobei die durchschnittliche Partikelgröße und die Kristallitgröße gemessen werden wie in der Beschreibung angegeben.

9. Sekundärbatterie, die eine Negativelektrode, die ein beliebiges von dem Negativelektroden-Aktivmaterial für eine Sekundärbatterie nach Anspruch 1 bis 8 umfasst, eine Positivelektrode und einen wasserfreien Elektrolyten umfasst.

## Revendications

1. Matériau actif d'électrode négative pour une batterie rechargeable comprenant : des particules contenant du Si, dans lequel
les particules contenant du Si incluent une phase de composé du silicium, une phase de silicium dispersée dans la phase de composé du silicium, et une phase de nitrure de silicium dispersée dans la phase de composé du silicium, et
la phase de composé du silicium est au moins l'une parmi une phase d'oxyde de silicium et une phase de silicate.

2. Matériau actif d'électrode négative pour une batterie rechargeable selon la revendication 1, dans lequel le rapport en masse de la phase de nitrure de silicium au total de la phase de composé du silicium et de la phase de nitrure de silicium incluses dans les particules contenant du Si est de 3 % en masse ou plus et 25 % en masse ou moins.

3. Matériau actif d'électrode négative pour une batterie rechargeable selon la revendication 1 ou 2, dans lequel la teneur en la phase de silicium incluse dans les particules contenant du Si est de 30 % en masse ou plus et 80 % en masse ou moins.

4. Matériau actif d'électrode négative pour une batterie rechargeable selon l'une quelconque des revendications 1 à 3, dans lequel un spectre de RMN obtenu par une mesure RMN-29Si des particules contenant du Si a au moins un pic dans la plage allant de -40 ppm à -50 ppm.

5. Matériau actif d'électrode négative pour une batterie rechargeable selon l'une quelconque des revendications 1 à 4, dans lequel un spectre de XRD obtenu par une mesure de diffraction des rayons X des particules contenant du Si a au moins deux pics dans la plage de 2θ = 34° à 36°.

6. Matériau actif d'électrode négative pour une batterie rechargeable selon l'une quelconque des revendications 1 à 5, dans lequel la phase de nitrure de silicium inclut Si₃N₄.

7. Matériau actif d'électrode négative pour une batterie rechargeable selon l'une quelconque des revendications 1 à 6, dans lequel la phase de nitrure de silicium a une taille de particule moyenne de 500 nm ou moins, dans lequel la taille de particule moyenne est mesurée comme indiqué dans la description.

8. Matériau actif d'électrode négative pour une batterie rechargeable selon l'une quelconque des revendications 1 à 7, dans lequel la phase de silicium a une taille de particule moyenne de 200 nm ou moins et la taille de cristallite de la phase de silicium est de 2 nm ou plus, dans lequel la taille de particule moyenne et la taille de cristallite sont mesurées comme indiqué dans la description.

9. Batterie rechargeable comprenant une électrode négative incluant n'importe quel matériau actif d'électrode négative pour une batterie rechargeable des revendications 1 à 8, une électrode positive, et un électrolyte non aqueux.
